(19) Europäisches Patentamt
European Patent Office
Office européen des brevets

(11) **EP 3 828 505 B1**

(12) **EUROPÄISCHE PATENTSCHRIFT**

(45) Veröffentlichungstag und Bekanntmachung des Hinweises auf die Patenterteilung:
**05.08.2026 Patentblatt 2026/32**

(21) Anmeldenummer: **20206143.8**

(22) Anmeldetag: **06.11.2020**

(51) Internationale Patentklassifikation (IPC):
**G01C 25/00** *(2006.01)* **G01C 17/38** *(2006.01)*
**G01C 21/08** *(2006.01)* **G01C 21/00** *(2006.01)*

(52) Gemeinsame Patentklassifikation (CPC):
**G01C 25/00; G01C 17/38; G01C 21/005; G01C 21/08**

(54) **VERFAHREN ZUM KALIBRIEREN EINES AN EINEM FAHRZEUG ANGEORDNETEN MAGNETOMETERS**

METHOD FOR CALIBRATING A MAGNETOMETER ARRANGED ON A VEHICLE

PROCÉDÉ D'ÉTALONNAGE D'UN MAGNÉTOMÈTRE AGENCÉ SUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2019 DE 102019132065**

(43) Veröffentlichungstag der Anmeldung:
**02.06.2021 Patentblatt 2021/22**

(73) Patentinhaber: **Deutsches Zentrum für Luft- und Raumfahrt e.V.**
**53227 Bonn (DE)**

(72) Erfinder:
- **Siebler, M. Sc. Benjamin**
  **82234 Wessling (DE)**
- **Sand, Dr. Sc. ETH Stephan**
  **82211 Herrsching (DE)**
- **Hanebeck, Prof. Dr.-Ing. Uwe**
  **76131 Karlsruhe (DE)**

(74) Vertreter: **dompatent Partnerschaft von Patentanwälten und Rechtsanwälten mbB Deichmannhaus am Dom Bahnhofsvorplatz 1 50667 Köln (DE)**

(56) Entgegenhaltungen:
**DE-A1- 102015 205 535 FR-A1- 3 069 649 US-A1- 2015 019 159**

- **SHOCKLEY J A ET AL: "Navigation of Ground Vehicles Using Magnetic Field Variations", 20141201, vol. 61, no. 4, 1 December 2014 (2014-12-01), pages 237 - 252, XP056008801, DOI: 10.1002/NAVI.70**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Kalibrieren eines Magnetometers, das mittels Kalibrierparameter kalibrierbar und an einem Fahrzeug angeordnet ist, welches eine Strecke befährt, längs derer der diskontinuierliche Verlauf des örtlichen Magnetfelds ortsaufgelöst bekannt ist.

Aus DE-B-10 2018 115 978 ist ein Verfahren zur Ermittlung der Position eines Schienenfahrzeugs in einem Schienennetz bekannt, bei dem als eines von mehreren Positionserkennungsmodulen ein an dem Schienenfahrzeug angeordnetes Magnetometer eingesetzt wird, das das sich längs eines Streckenabschnitts örtlich verändernde Magnetfeld erfasst. Zumindest ein weiteres Positionsermittlungsmodul weist ein inertiales Navigationssystem auf, mit dem ebenfalls die Position und/oder die Raumlage und/oder die Geschwindigkeit des Schienenfahrzeugs ermittelbar ist. Zur Erfassung von Abweichungen dieser mit dem inertialen Navigationssystem ermittelten Parameter wird ein Zustandsschätzer eingesetzt, um die Ergebnisse des inertialen Navigationssystems zu verbessern. Der Zustandsschätzer wird ferner zur Schätzung einer Abweichung, einer Kalibrierung und/oder eines Fehlers benutzt, so dass die Werte des inertialen Navigationssystems insoweit korrigiert werden können. Bei dem bekannten Verfahren wird, wie im Stand der Technik üblich, ein kalibriertes Magnetometer vorausgesetzt. Die durch den Zustandsschätzer realisierbare Kalibrierung bezieht sich bei dem bekannten Verfahren auf das inertiale Navigationssystem.

Aus MIRABADI, A.; MORT, N; SCHMID, F: Fault detection and isolation in multisenor train navigation systems. In: UKACC International Conference on Control '98 (Conf. Publ. No. 455), 1998, 969 - 974. - ISSN 0537-9989 https://doi.org/10.1049/cp: 19980360 [abgerufen am 24.09.2020] sind verschiedene Schätzer beschrieben, die im Zusammenhang mit Navigationssystemen für Züge eingesetzt werden können.

Ferner ist auch in DE-A-10 2015 205 535 ein Verfahren zur Bestimmung der Position eines Fahrzeugs beschrieben.

Die Lokalisierung von Schienenfahrzeugen unter Verwendung von Messungen des lokalen Magnetfeldes basiert auf der Beobachtung, dass das Erdmagnetfeld lokal stark durch die in der Infrastruktur verbauten, ferromagnetische Materialien gestört wird. Die Störungen sind unregelmäßig und ortsspezifisch. Eine digitale Magnetfeldkarte, die diese Störungen jeweils der dazugehörigen Position in Streckennetz zuweist, ermöglicht daher die Bestimmung der aktuellen Zugposition durch den Abgleich des aktuell von einem Magnetometer gemessenen Magnetfelds mit dem Feld in der Karte.

Problematisch ist hierbei allerdings, dass ein zuverlässiger Abgleich von Messung und Karte nur dann möglich ist, wenn das verwendete Magnetometer kalibriert ist. Ohne diese Kalibrierung liefert das Magnetometer Werte, die nicht mit denen in der Karte übereinstimmen. Die Kalibrierung eines Magnetometers ist z.B. thematisiert in FR-A-3 069 649.

Nach dem Stand der Technik wird ein Magnetometer durch Rotation des Sensors innerhalb eines bekannten homogenen Magnetfelds kalibriert. In der oben beschrieben Anwendung eines Magnetometers für die Lokalisierung eines Schienenfahrzeuges eignen sich diese Methoden nicht, da der Sensor im eingebauten Zustand kalibriert werden muss, was bedeutet, dass das Magnetometer zusammen mit dem Fahrzeug in einem bekannten Feld rotiert werden müsste. Aufgrund der Größe und Masse eines Zuges ist es sehr aufwendig das Magnetometer mit den im Stand der Technik bekannten Methoden zu kalibrieren. Des Weiteren können bauliche Maßnahmen am Zug die Kalibrierparameter verändern, was eine erneute Kalibrierung erfordert.

Ein alternativer Ansatz der Kalibrierung eines von einem Fahrzeug mitgeführten Magnetometers ist in US-A-2015/0019159 beschrieben, deren Gegenstand den Oberbegriff des Anspruchs 1 bestimmt.

Aufgabe der Erfindung ist es, ein Verfahren zum Kalibrieren eines Magnetometers zu schaffen, das an einem Fahrzeug montiert ist.

Zur Lösung dieser Aufgabe wird mit der Erfindung ein Verfahren zum Kalibrieren eines Magnetometers vorgeschlagen, das mittels Kalibrierparameter kalibrierbar und an einem Fahrzeug angeordnet ist, welches eine Strecke befährt, längs derer der diskontinuierliche Verlauf des örtlichen Magnetfelds ortsaufgelöst bekannt ist, wobei bei dem Verfahren

- die Werte der Größe und Richtung des örtlichen Magnetfelds in Abhängigkeit von verschiedenen Positionen auf der Strecke bereitgestellt werden,
- das Fahrzeug mit Magnetometer die Strecke befährt,
- während der Fahrt die Ortsposition des Fahrzeugs auf der Strecke ermittelt wird,
- das örtliche Magnetfeld an der betreffenden Ortsposition mittels des Magnetometers bezüglich Größe und Richtung des Magnetfelds vermessen wird,
- die aktuellen Messwerte des Magnetometers mit den dem aktuellen Aufenthaltsort des Fahrzeugs zugeordneten Werten der bereitgestellten Größe und Richtung des Magnetfelds verglichen werden und
- die Kalibrierparameter des Magnetometers in Abhängigkeit von dem Vergleich und dem Ausmaß der Abweichung der gemessenen Werte von den bereitgestellten Werten bestimmt werden,
- wobei zur Positionsermittlung des Fahrzeugs in regelmäßigen oder unregelmäßigen Zeitabständen die jeweils aktuellen Messwerte seines Magnetometers einem Schätzer zugeführt werden, der anhand dieser Messwerte und der aktuell bestimmten Kalibrierparameter simultan mit deren Schätzung auch die aktuelle Position des Fahrzeugs schätzt.

Nach dem erfindungsgemäßen Verfahren wird der diskontinuierliche Verlauf des örtlichen Magnetfelds längs der vom Fahrzeug zu befahrenden Strecke als bekannt vorausgesetzt. Die Werte für die Größe und Richtung des örtlichen Magnetfelds in Abhängigkeit von verschiedenen Stellen (Positionen) auf der Strecke werden also bereitgestellt, was vorzugsweise digital gegeben ist und beispielsweise in Form einer digitalen Karte bereitgestellt wird. Das Fahrzeug mit dem an ihm montierten Magnetometer befährt nun diese Strecke, wobei die aktuelle Ortsposition des Fahrzeugs auf der Strecke beispielsweise messtechnisch oder aber auch durch Schätzung ermittelt wird. Das mit dem Magnetometer gemessene örtliche Magnetfeld an der aktuellen Ortsposition wird nun mit dem für diesen Ort bekannten örtlichen Magnetfeld verglichen und dementsprechend werden die Kalibrierparameter bestimmt.

Nach der Erfindung wird also das bekannte Konzept der Kalibrierung eines Magnetometers, nämlich dieses in einem bekannten homogenen Magnetfeld zu drehen, so dass die Messwerte des Magnetometers sich verändern, sozusagen invertiert, indem nun die Position des Magnetometers bezogen auf die zu befahrende Strecke konstant bleibt, die Strecke selbst aber über ein sich örtlich veränderndes Magnetfeld "verfügt". In beiden Fällen nutzt man also sich örtlich verändernde Magnetfeldmessungen, um das Magnetometer zu kalibrieren.

Wie oben bereits erwähnt, besteht eine Möglichkeit der Ortsbestimmung des Fahrzeugs längs der Strecke darin, dass die Position des Fahrzeugs auf der Strecke mittels einer Sensorik wie z.B. einem Satellitennavigationssignalempfänger ermittelt wird bzw. geschätzt wird.

Wesentlich vorteilhafter als die Bereitstellung einer entsprechenden Sensorik ist es jedoch, wenn zur Positionsermittlung des Fahrzeugs in regelmäßigen oder unregelmäßigen Zeitabständen die jeweils aktuellen Messwertes seines Magnetometers einem Schätzer zugeführt werden, der anhand dieser Messwerte und der aktuell eingestellten Kalibrierparameter die aktuelle Position des Fahrzeugs schätzt. Die Schätzung der Positionsermittlung und die Bestimmung der Kalibrierparameter erfolgen erfindungsgemäß simultan.

Zur gleichzeitigen Schätzung von Ortsposition und Kalibrierparameter kann als Schätzer ein Partikel-Filter mit einer Vielzahl von Partikeln eingesetzt werden, wobei das Filter jedem Partikel ein Gewicht zuweist, das angibt, wie wahrscheinlich es unter Berücksichtigung der aktuell für das Partikel geltenden Kalibrierparameter ist, dass das Partikel die aktuelle Position des Fahrzeugs beschreibt, wobei verschiedene angenommene Positionen längs der Strecke, die durch die Partikel repräsentiert sind, für die aktuelle Position, an der sich das Fahrzeug befindet, zutreffend sein könnten oder nicht zutreffend sein könnten. Als Partikel-Filter eignen sich sämtliche Arten eines Bayes'schen Filtertypes oder aber auch ein Rao-Blackwellized Partikel-Filter. Die Partikel des Partikelfilters entsprechen verschiedenen Positionen des Fahrzeugs längs der Strecke. Ihre Gewichte geben den Grad der Wahrscheinlichkeit dafür an, dass sich das Fahrzeug an der durch das Partikel repräsentierten Position befindet. Hierbei wird auch der Satz an Kalibrierparametern berücksichtigt, der jedem Partikel zugeordnet ist. Auch dieser Kalibrierparametersatz ist mit einer gewissen Unsicherheit behaftet, die sich im Laufe des Verfahrens ändern kann.

Was die simultane Schätzung sowohl der Kalibrierparameter als auch der Ortsbestimmung betrifft, ist es von Vorteil, wenn für jedes Partikel des Partikel-Filters ein separater Kalibrierparametersatz geschätzt wird, wobei diese Schätzung simultan zur Positionsbestimmung und vorzugsweise nur durch Abgleich der Magnetfeldkarte mit den aktuellen Messwerten des unkalibrierten Magnetometers erfolgt, und wobei die Bestimmung der Wahrscheinlichkeit eines Partikels dafür, dass es die aktuelle Position des Fahrzeugs beschreibt, die aktuelle Unsicherheit für die Genauigkeit des Kalibrierparametersatzes berücksichtigt, der dem betreffenden Partikel zugewiesen ist.

In weiterer zweckmäßiger Ausgestaltung der Erfindung kann vorgesehen sein, dass zum Abgleich des Magnetometers deren jeweils aktuell eingestellte Kalibrierparameter einem Schätzer zugeführt werden, der angibt, wie wahrscheinlich es ist, dass verschieden groß angenommene Kalibrierparameter zutreffend sein könnten oder nicht zutreffend sein könnten.

Bei dem Schätzer handelt es sich beispielsweise um ein Kalman-Filter oder um einen Least-Squares Schätzer.

Die Erfindung ist generell bei sämtlichen Formen von spurgeführten Fahrzeugen anwendbar, die mit einem Magnetometer ausgestattet sind, um das örtliche Magnetfeld zu detektieren. Bei spurgeführten Fahrzeugen handelt es sich beispielsweise um Schienenfahrzeuge, induktiv, kapazitiv oder auf sonstige Weise berührungslos geführte Fahrzeuge, autonom navigierende mobile Einheiten, manuell gesteuerte Fahrzeuge oder ferngesteuerte Fahrzeuge. Die Erfindung ist aber grundsätzlich auch anwendbar bei Fahrzeugen zu Wasser und in der Luft.

Mit der Erfindung wird also ein Verfahren vorgeschlagen, das es ermöglicht, Magnetometer relativ zu einer Magnetfeldkarte zu kalibrieren. Relative Kalibrierung bedeutet hier, dass das Magnetometer nicht auf den absoluten physikalischen Wert kalibriert werden muss, sondern dass es ausreicht, den Sensor so zu kalibrieren, dass die Messungen zur Karte passen. Das Magnetometer für die Kartierung muss dabei selbst nicht kalibriert sein. Ist die -Fahrzeugposition während der Messungen bekannt, so ist die Kalibrierung einfach durch Methoden für lineare Schätzprobleme zu lösen z.B. mit einem Least-Squares Schätzer.

In einer Ausprägung der Erfindung ermöglicht das hier vorgeschlagene Verfahren die Schätzung der Kalibrierparameter auch ohne Kenntnis der Fahrzeugposition. Durch die Formulierung eines gemeinsamen Schätzproblems und dessen Lösung mithilfe von rekursiven Bayes'schen Schätzverfahren werden Schätzungen der Position und der Kalibrierparameter simultan ermöglicht.

Bei dem erfindungsgemäßen Verfahren wird die Kalibrierung vornehmlich in Software gelöst und erfolgt vorzugsweise praktisch simultan zur eigentlichen Lokalisierung. Dafür wird keine zusätzliche Hardware benötigt. Des Weiteren ermöglicht die Kalibrierung des Magnetometers den tatsächlich praktischen Einsatz der Magnetfeldlokalisierung, da ohne die Kalibrierung je nach Fahrzeugtyp und Einbauposition teils unterschiedliche Karten erzeugt werden müssten, was nur mit größerem Aufwand möglich ist. Durch die kontinuierliche und simultane Schätzung der Kalibrierparameter während der Lokalisierung kann zusätzlich automatisch auf eine Veränderung der Kalibrierparameter reagiert werden.

Die Basis für das Verfahren ist die Definition eines gemeinsamen Schätzproblems für die Bestimmung der Position und der Kalibrierparameter. Formal schätzt das vorgeschlagene Verfahren in dieser bevorzugten Ausprägung die a-posteriori Wahrscheinlichkeitsdichte

$$p(p_{0:k}, \theta_k | y_{0:k}, m)$$

mit

- $p$ **als** Position, die zusätzlich noch die Zuggeschwindigkeit und Beschleunigung beinhalten kann,
- $\theta$ als Kalibrierparameter,
- $y$ als unkalibrierte Magnetfeldmessung und
- m als bekannte Karte des Magnetfelds.

Die Indices 0: k und $k$ bedeuten, dass alle Positionen von Zeitschritt 0 bis $k$ gemeinsam mit den Parametern zum Zeitschritt k geschätzt werden, und zwar auf Grundlage aller bis zum jeweiligen Zeitschritt verfügbaren Messungen. Die Messung $y$ beinhalten in jedem Zeitschritt die Messungen einer Triade von Magnetometern, d.h. von drei in unterschiedliche 3D-Richtungen und insbesondere orthogonal zueinanderstehenden Sensoren. Die drei Achsen sind notwendig, um die Richtung und die Amplitude des Magnetfeldes zu erfassen. Die Aufgabe der Kalibrierung ist es, den aktuellen Messwert bzw. Messvektor $y_k$ auf die Karte an der aktuellen Position $p_k$ abzubilden. Dafür wird im Allgemeinen ein lineares Model verwendet, dessen Parameter $\theta$ geschätzt werden sollen. Formal gilt somit

$$y_k = R(\theta)m(p_k) + b(\theta) + n_k$$

wobei

- R eine Matrix ist,
- b ein Vektor ist und
- n das Rauschen der Sensoren beschreibt.

Um den linearen Zusammenhang zwischen Messung und Parameter zu verdeutlichen, kann das Modell alternativ durch

$$y_k = \begin{bmatrix} m(p_k)^T & 0 & 0 & 1 & 0 & 0 \\ 0 & m(p_k)^T & 0 & 0 & 1 & 0 \\ 0 & 0 & m(p_k)^T & 0 & 0 & 1 \end{bmatrix} \theta + n_k$$

beschrieben werden. Das lineare Modell bildet hartmagnetische Effekte und weich magnetische Effekte ab. Hartmagentische Effekte erzeugen eine konstante Verschiebung der Messungen wohingegen weichmagnetische Effekte das auf den Sensor wirkende externe Feld drehen und skalieren.

Wie bereits erwähnt, ist die Bestimmung von $\theta$ bei bekannter Position trivial. Sind ausreichend Messungen Vorhanden kann das lineare Modell invertiert werden und die Parameter $\theta$ mit einem Least-Squares Schätzer bestimmt werden. Bei genauer Betrachtung ist die Schätzung der Parameter dabei nur möglich, wenn das Magnetfeld an verschiedenen Positionen gemessen wird und sich das Magnetfeld an diesen Positionen unterscheidet. Die Kalibrierung erfordert somit eine Bewegung des Zuges. Formal kann gezeigt werden, dass die Beobachtbarkeit der Parameter stark von der Variation des Magnetfelds abhängt. Im Stand der Technik wird die Variation durch Rotation des Sensors, zusammen mit der Plattform, auf dem der Sensor montiert ist, oder durch das Erzeugen eines Feldes garantiert. In dem erfindungsgemäßen Verfahren werden die Inhomogenität des Erdmagnetfelds entlang z.B. einer Bahnstrecke genutzt.

Im Stand der Technik wird häufig das lineare Modell verwendet. Es bietet den Vorteil, dass eine Verkettung von linearen Modellen wiederum ein lineares Model ist. Das ermöglicht die relative Kalibrierung, auch wenn die Karte mit einem unkalibrierten Sensor erzeugt wurde.

Die konkrete Ausführung der Dichtenschätzung basiert auf einem zeitdiskreten Zustandsraummodell das den Zusammenhang zwischen den zu schätzenden Größen, der Karte und den Messungen herstellt. Das Modell ist wie folgt definiert

$$p_{k+1} = F_k p_k + w_k$$

$$\theta_{k+1} = \theta_k + q_k$$

$$y_k = R(\theta_k)m(p_k) + b(\theta_k) + n_k$$

wobei

- $F_k$ die Systemmatrix des Bewegungsmodells,
- $w_k$ das Prozessrauschen der Zugposition und
- $q_k$ das Prozessrauschen der Parameter

beschreibt.

Die Wahl der Systemmatrix und des Prozessrauschen $w_k$ bestimmt wie schnell sich die Position des Zuges ändern kann. Für die Parameter wird ein quasistatisches Verhalten angenommen. Das Prozessrauschen $q_k$ ist hier primär als Tuning-Parameter anzusehen. Die simultane Schätzung der Position und der Parameter wird ermöglicht durch die Tatsache, dass die Parameter nahezu konstant sind. Während der Fahrt wird durch das Magnetometer eine Folge von unterschiedlichen Magnetfeldmessungen aufgezeichnet. Die Aufgabe des Schätzers ist es jetzt im Prinzip für alle möglichen Positionsverläufe zu überprüfen ob die aktuellen Messungen mit einem nahezu konstanten Parametersatz auf die Karte an den jeweiligen Positionen abgebildet werden kann. Zur Einschränkung der Komplexität des Schätzers ist es möglich am Anfang (Zeitschritt $k = 0$) Vorwissen, d.h. eine grobe Zugposition und Geschwindigkeit mit einzubeziehen und durch geeignete Wahl des Bewegungsmodells den Suchraum stark einzuschränken. Des Weiteren kann das Problem in zwei miteinander verbundene Schätzprobleme aufgeteilt werden. Die Schätzung der Kalibrierparameter wird dabei in einem optimalen linearen Kalman Filter geschätzt und die Position, die über die Karte nicht linear mit den Messungen zusammenhängt, mit einem Partikel-Filter. Die Aufteilung des Problems führt zu einer weiteren Reduktion der Komplexität. Die Methode wurde bereits mit Messdaten evaluiert und erscheint vielversprechend. Durch die geschickte Zerlegung des komplexen Schätzproblems in einen linearen und einen nichtlinearen Anteil ist zudem eine Berechnung der Lokalisierung in Echtzeit möglich.

Für das hier vorgeschlagene Verfahren wird die a posteriori Dichte wie folgt faktorisiert

$$p(p_{0:k}, \theta_k | y_{0:k}, m) = \underbrace{p(p_{0:k} | y_{0:k}, m)}_{Partikel\ Filter} \underbrace{p(\theta_k | p_{0:k}, y_{0:k}, m)}_{Kalman\ Filter}$$

Für die Parameterschätzung wird dabei angenommen, dass alle Positionen $p_{0:k}$ bekannt sind und somit auch das Messmodell

$$y_k = \begin{bmatrix} m(p_k)^T & 0 & 0 & 1 & 0 & 0 \\ 0 & m(p_k)^T & 0 & 0 & 1 & 0 \\ 0 & 0 & m(p_k)^T & 0 & 0 & 1 \end{bmatrix} \theta + n_k$$

bekannt ist. Zusammen mit dem Systemmodel $\theta_{k+1} = \theta_k + q_k$ ergibt sich somit ein lineares Zustandsraummodell dessen Zustand mit einem Kalman Filter geschätzt werden kann. Der Zusammenhang zwischen Position und Messung bleibt dabei nichtlinear. Die Position wird daher simultan in einem Partikel-Filter geschätzt. Bei einem Partikel-Filter wird die Dichte über eine Menge von gewichteten Partikeln approximiert. Die Gewichte können als Wahrscheinlichkeit für die Richtigkeit des aktuellen Partikels bzw. dessen zurückgelegte Trajektorie (von Zeitpunkt 0 bis $k$) im Zustandsraum interpretiert werden. Jedes Partikel repräsentiert eine mögliche Trajektorie des Zuges über das Magnetfeld, wobei die Trajektorie $p_{0:k}$ neben der Position noch die Geschwindigkeit und Beschleunigung beinhalten kann. Für jede dieser Trajektorien bzw. für jedes Partikel wird ein separates Kalman Filter berechnet. Basierend auf den im Kalman Filter geschätzten Parametern und den dazugehörigen Unsicherheiten, den aktuellen Messungen und der Karte wird dann jedem Partikel ein Gewicht zugewiesen. Aus der geschätzten Dichte können für die Position und die Parameter bspw. der Maximum a-posteriori oder der minimum mean square error Punktschätzer abgeleitet werden.

Die Erfindung wird nachfolgend anhand eines Ausführungsbeispiels und unter Bezugnahme auf die Zeichnung näher erläutert. Im Einzelnen zeigen dabei:

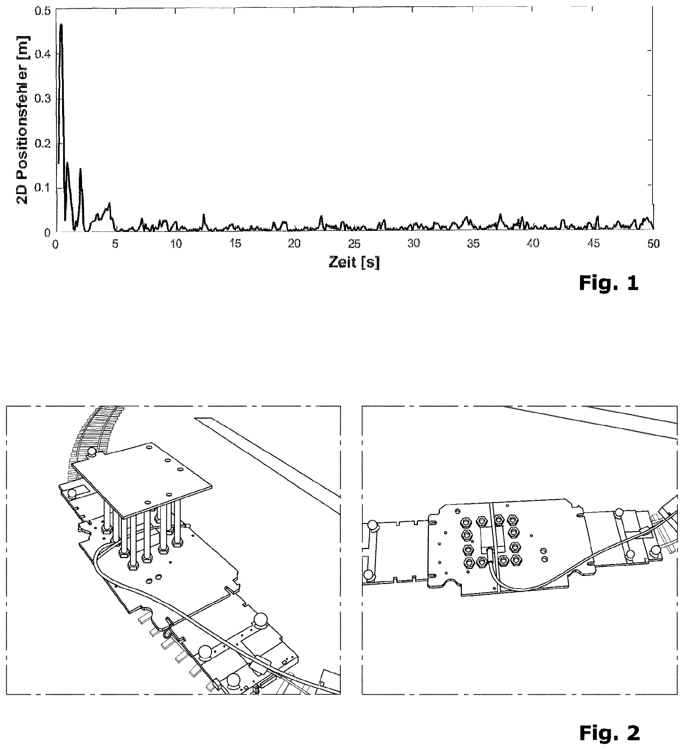

Fig. 1 basierend auf durchgeführten Messungen den Verlauf des Positionsfehlers des Partikel-Filters, mit dem gleichzeitig die Fahrzeugposition und die Kalibrierparameter geschätzt wurden,

Fig. 2 den Messaufbau mit einem Modellzug und einem Magnetometer, wobei im linken Bild der Messaufbau für die Erstellung der Magnetfeldkarte und im rechten Bild der Aufbau zum Erfassen der Daten abgebildet ist, mit dem die Lokalisierung berechnet wurde, wobei der Zug mit Infrarotreflektoren ausgestattet ist, um die aktuelle Zugposition mit einem optischen System nachverfolgen zu können, was für die Ermittlung der "Güte" der Schätzwerte für die Ermittlung der Position und der Kalibrierparameter diente, und

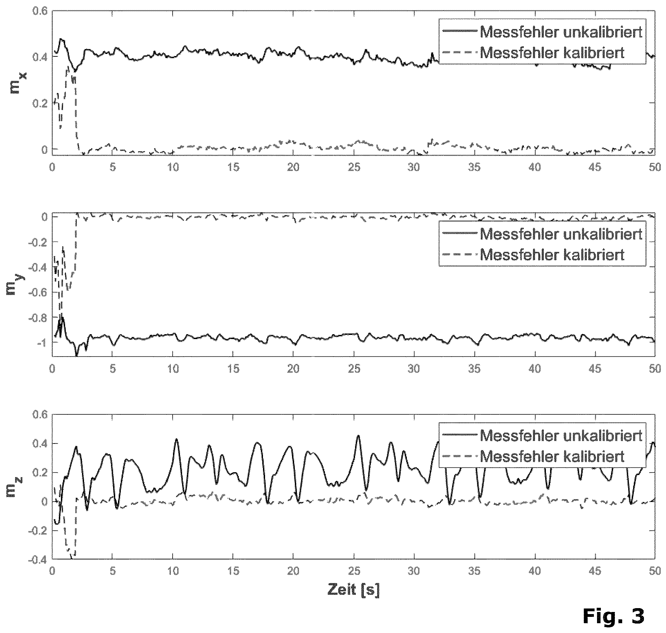

Fig. 3 die Differenz zwischen dem Magnetfeld der Karte und den aktuellen Magnetometer-Messungen vor und nach der Kalibrierung, wobei die Kalibrierparameter durch den Partikel-Filter geschätzt wurden und die drei Diagramme die Messungen der drei verschiedenen Achsen des Magnetometers (drei Achsen sind notwendig, da sonst nicht die Richtung und die Größe des Magnetfelds erfasst werden kann) zeigen.

In Fig. 1 ist das Ergebnis des Verfahrens für eine Modellzug-Teststrecke zu sehen. Des Weiteren ist in Fig. 2 der Messaufbau zur Erstellung der Karte (links) und zur Aufnahme der Daten für die Lokalisierung (rechts) abgebildet. Das Partikel Filter verwendet 5000 Partikel und läuft bei einer Update-Rate von 10 Hz in Echtzeit. Wie in Fig. 1 erkennbar, konvergiert das Filter nach einer anfänglichen größeren Unsicherheit gegen die richtige Position und ein Positionsfehler im Bereich von wenigen Zentimetern ist realisierbar. Die gute Übereinstimmung nach der Kalibrierung (Messfehler nahe Null) zeigt, dass nicht nur die Position, sondern auch die Parameter korrekt geschätzt werden.

Erste Tests mit Messdaten von einem Dampf- und einem Dieselzug haben die Bestätigung der Übertragbarkeit auf echte Züge gezeigt.

Anhand von Fig. 3 ist zu erkennen, dass der Messfehler bei kalibriertem Magnetometer nach kurzer Zeit gegen Null geht (siehe die gestrichelten Linien in den Diagrammen der Fig. 3, die die Messfehler bei Kalibrierung des Magnetometers zeigen, gegenüber den durchgezogenen Linien in den Diagrammen, die die Messfehler bei unkalibriertem Magnetometer zeigen).

Das hier beschrieben Verfahren kann zudem durch zusätzliche Sensorik erweitert werden. Die Integration von bspw. Inertialsensorik oder einer Odometrie führt zu einer erhöhten Robustheit des Verfahrens und zu einer Reduktion der Komplexität. Sie werden aber nicht zwingend benötigt. Ist ein GNSS Empfänger vorhanden, kann eine initiale Schätzung der Parameter auch mit den GNSS Positionen und der Karte durchgeführt werden. Das hier vorgeschlagene Verfahren eignet sich dann zur kontinuierlichen Anpassung der initialen Parameter auf neue Gegebenheiten.

**Patentansprüche**

1. Verfahren zum Kalibrieren eines Magnetometers, das mittels Kalibrierparameter kalibrierbar und an einem Fahrzeug angeordnet ist, welches eine Strecke befährt, längs derer der diskontinuierliche Verlauf des örtlichen Magnetfelds ortsaufgelöst bekannt ist, wobei bei dem Verfahren

- die Werte der Größe und Richtung des örtlichen Magnetfelds in Abhängigkeit von verschiedenen Positionen auf der Strecke bereitgestellt werden,
- das Fahrzeug mit Magnetometer die Strecke befährt,
- während der Fahrt die Ortsposition des Fahrzeugs auf der Strecke ermittelt wird,
- das örtliche Magnetfeld an der betreffenden Ortsposition mittels des Magnetometers bezüglich Größe und Richtung des Magnetfelds vermessen wird,
- die aktuellen Messwerte des Magnetometers mit den dem aktuellen Aufenthaltsort des Fahrzeugs zugeordneten Werten der bereitgestellten Größe und Richtung des Magnetfelds verglichen werden und

- die Kalibrierparameter des Magnetometers in Abhängigkeit von dem Vergleich und dem Ausmaß der Abweichung der gemessenen Werte von den bereitgestellten Werten bestimmt werden,

**dadurch gekennzeichnet, dass**

- zur Positionsermittlung des Fahrzeugs in regelmäßigen oder unregelmäßigen Zeitabständen die jeweils aktuellen Messwerte seines Magnetometers einem Schätzer zugeführt werden, der anhand dieser Messwerte und der aktuell bestimmten Kalibrierparameter simultan mit deren Schätzung auch die aktuelle Position des Fahrzeugs schätzt.

2. Verfahren nach Anspruch 1, **dadurch gekennzeichnet, dass** der Schätzer ein Partikel-Filter mit einer Vielzahl von Partikeln aufweist, wobei das Filter jedem Partikel ein Gewicht zuweist, das angibt, wie wahrscheinlich es unter Berücksichtigung der aktuell für das Partikel geltenden Kalibrierparameter ist, dass das Partikel die aktuelle Position des Fahrzeugs beschreibt, und dass verschiedene angenommene Positionen längst der Strecke, die durch die Partikel repräsentiert sind, für die aktuelle Position, an der sich das Fahrzeug befindet, zutreffend sein könnten oder nicht zutreffend sein könnten.

3. Verfahren nach Anspruch 1 oder 2, **dadurch gekennzeichnet, dass** für jedes Partikel des Partikel-Filters ein separater Kalibrierparametersatz geschätzt wird, wobei diese Schätzung simultan zur Positionsbestimmung und durch Abgleich der Magnetfeldkarte mit den aktuellen Messwerten des unkalibrierten Magnetometers erfolgt, und dass die Bestimmung der Wahrscheinlichkeit eines Partikels dafür, dass es die aktuelle Position des Fahrzeugs beschreibt, die aktuelle Unsicherheit des Kalibrierparametersatzes, der dem betreffenden Partikel zugewiesen ist, berücksichtigt.

4. Verfahren nach einem der Ansprüche 1 bis 3, **dadurch gekennzeichnet, dass** das Fahrzeug ein spurgeführtes Fahrzeug, wie z.B. ein Schienenfahrzeug oder ein induktiv oder kapazitiv bzw. berührungslos geführtes Fahrzeug, eine autonom navigierende mobile Einheit, ein manuell gesteuertes Fahrzeug oder ein ferngesteuertes Fahrzeug ist.

**Claims**

1. A method for calibrating a magnetometer which can be calibrated by means of calibration parameters and is arranged on a vehicle traveling on a route along which the discontinuous course of the local magnetic field is known with spatial resolution, in which method

- the values of the magnitude and direction of the local magnetic field are provided as a function of different positions on the route,
- the vehicle travels on the route with a magnetometer,
- the location of the vehicle on the route is determined while traveling,
- the local magnetic field at the relevant location is measured using the magnetometer with regard to the magnitude and direction of the magnetic field,
- the current measured values of the magnetometer are compared with the values of the provided magnitude and direction of the magnetic field assigned to the current whereabouts of the vehicle, and
- the calibration parameters of the magnetometer are determined as a function of the comparison and the extent of the deviation of the measured values from the values provided,

**characterized in that**

- to determine the position of the vehicle, the respective current measured values of its magnetometer are fed to an estimator at regular or irregular intervals, which also estimates the current position of the vehicle simultaneously with their estimation using these measured values and the currently determined calibration parameters.

2. The method according to claim 1, **characterized in that** the estimator comprises a particle filter having a plurality of particles, the filter assigning to each particle a weight indicating how likely it is, given the calibration parameters currently applicable to the particle, that the particle describes the current position of the vehicle, and that different assumed positions along the route represented by the particles may or may not be applicable to the current position at which the vehicle is located.

3. The method according to claim 1 or 2, **characterized in that** a separate calibration parameter set is estimated for each particle of the particle filter, said estimation being performed simultaneously with the position determination and by comparison of the magnetic field map with the current measured values of the uncalibrated magnetometer, and **in that** the determination of the probability of a particle that it describes the current position of the vehicle takes into account the current uncertainty of the calibration parameter set assigned to the respective particle.

4. The method according to any one of claims 1 to 3, **characterized in that** the vehicle is a track-guided vehicle, such as a rail vehicle or an inductively or capacitively or contactlessly guided vehicle, an autonomously navigating mobile unit, a manually controlled vehicle or a remote-controlled vehicle.

**Revendications**

1. Procédé d'étalonnage d'un magnétomètre apte à être étalonné à l'aide de paramètres d'étalonnage et monté sur un véhicule qui parcourt un trajet le long duquel la courbe discontinue du champ magnétique local est connue avec une résolution spatiale, procédé dans lequel

   - les valeurs de l'intensité et de la direction du champ magnétique local sont fournies en fonction de différentes positions sur le trajet,
   - le véhicule équipé du magnétomètre parcourt le trajet,
   - la position géographique du véhicule sur le trajet est déterminée pendant le parcours,
   - le champ magnétique local à la position géographique concernée est mesuré au moyen du magnétomètre en ce qui concerne l'intensité et la direction du champ magnétique,
   - les valeurs de mesure actuelles du magnétomètre sont comparées aux valeurs de l'intensité et de la direction du champ magnétique fournies et associées à l'emplacement actuel du véhicule, et
   - les paramètres d'étalonnage du magnétomètre sont déterminés en fonction de la comparaison et de l'ampleur de l'écart entre les valeurs mesurées et les valeurs fournies,
   **caractérisé en ce que**
   - pour déterminer la position du véhicule à intervalles de temps réguliers ou irréguliers, les valeurs de mesure actuelles respectives de son magnétomètre sont transmises à un estimateur qui, à partir de ces valeurs de mesure et des paramètres d'étalonnage actuellement déterminés, estime simultanément la position actuelle du véhicule en même temps que ces paramètres.

2. Procédé selon la revendication 1,
   **caractérisé en ce que** l'estimateur comprend un filtre à particules comportant une multitude de particules, le filtre attribuant à chaque particule un poids qui indique, compte tenu des paramètres d'étalonnage actuellement applicables à la particule, la probabilité que la particule décrive la position actuelle du véhicule et que différentes positions supposées le long du trajet, représentées par les particules, pourraient être ou ne pas être valables pour la position actuelle à laquelle se trouve le véhicule.

3. Procédé selon la revendication 1 ou 2,
   **caractérisé en ce qu'**un ensemble de paramètres d'étalonnage distinct est estimé pour chaque particule du filtre à particules, cette estimation s'effectuant simultanément à la détermination de la position et par comparaison de la carte du champ magnétique avec les valeurs de mesure actuelles du magnétomètre non étalonné, et **en ce que** la détermination de la probabilité qu'une particule décrive la position actuelle du véhicule tient compte de l'incertitude actuelle de l'ensemble de paramètres d'étalonnage attribué à la particule concernée.

4. Procédé selon l'une des revendications 1 à 3,
   **caractérisé en ce que** le véhicule est un véhicule guidé sur voie, tel qu'un véhicule ferroviaire ou un véhicule guidé de façon inductive ou capacitive, c'est-à-dire sans contact, une unité mobile à navigation autonome, un véhicule à commande manuelle ou un véhicule télécommandé.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018115978 B
- DE 102015205535 A
- FR 3069649 A
- US 20150019159 A

**In der Beschreibung aufgeführte Nicht-Patentliteratur**

- **MIRABADI, A.** ; **MORT, N** ; **SCHMID, F**. Fault detection and isolation in multisenor train navigation systems. *UKACC International Conference on Control '98 (Conf. Publ. No. 455)*, 1998, ISSN 0537-9989, 969-974, https://doi.org/10.1049/cp: 19980360